(19) Europäisches Patentamt

European Patent Office

Office européen des brevets

(11) Publication number: 0 631 336 A1

## (12) EUROPEAN PATENT APPLICATION
## published in accordance with Art. 158(3) EPC

(21) Application number: 92920027.7

(22) Date of filing: 22.09.92

(86) International application number:
PCT/JP92/01207

(87) International publication number:
WO 94/07275 (31.03.94 94/08)

(51) Int. Cl.5: H01M 4/58

(43) Date of publication of application:
28.12.94 Bulletin 94/52

(84) Designated Contracting States:
DE FR GB

(71) Applicant: YUASA CORPORATION
6-6, Josai-cho
Takatsuki-shi,
Osaka 569 (JP)

(72) Inventor: MISHIMA, Hiromitsu

Yuasa Battery Co., Ltd.,
6-6, Josai-cho
Takatsuki-shi,
Osaka 569 (JP)

(74) Representative: Hamilton, Alistair et al
Mewburn Ellis,
York House,
23 Kingsway
London WC2B 6HP (GB)

(54) LITHIUM SECONDARY CELL.

(57) To improve reversibility of $LiCoO_2$ used as a positive pole active material in a lithium secondary cell, use is made of $LiCoO_2$ which has a peak intensity of X-ray diffraction line on a (101) plane within the range of 5 to 15 when the peak intensity of the X-ray diffraction line on a (003) plane is 100.

Fig. 1

RATIO OF PEAK STRENGTH OF
X-RAY DIFFRACTION: $I_{101}/I_{003}$

EP 0 631 336 A1

Technical Field

This invention relates to a lithium secondary battery, especially to its positive active material.

Background Art

In resent years, studies have been carries actively on a lithium secondary battery and those having a working voltage of about 3V are now partially put in practical use. However, it can not be said that these lithium secondary batteries are provided with satisfactory characteristics with respect to energy density and service life.

Recently, batteries which utilize a positive active material having a working voltage of about 4V in order to increase the energy density and which utilize an organic burnt material as a negative electrode in order to prolong the service life, are reported and attract public attention.

The inventors begun investigations into 4V-group positive active materials having a working voltage of about 4V on the basis of consideration that, even when the service life was prolonged by utilizing the organic burnt material as the negative electrode, a battery having a high energy density could not be obtained if the working voltage of positive electrode was not high. As the result, we came into conclusion that $LiCoO_2$ shown by Mizushima et al., "Material Research Bulletin" vol. 15, pp. 783, 1980, was the favorable 4V-group positive active material in the present stage.

However, the following problems have become clear from energetic studies on the $LiCoO_2$. Although the $LiCoO_2$ had a high working voltage of about 4V and a high energy density, the reversibility of $LiCoO_2$ was poor when it was subjected to deep charging and discharging. In other words, it was difficult to put the $LiCoO_2$ into practical use as the positive active material of lithium secondary battery if the problem of poor reversibility in the $LiCoO_2$ was not improved.

An object of this invention is to improve the poor reversibility of $LiCoO_2$ and to provide a lithium secondary battery having a large discharge capacity.

Disclosure of the Invention

In a lithium secondary battery utilizing $LiCoO_2$ as its positive active material, this invention is characterized by that a peak strength of X-ray diffraction in (101) plane of $LiCoO_2$ lies within a range of 5 to 15 when a peak strength of X-ray diffraction in (003) plane is 100.

When the $LiCoO_2$ is subjected to deep charging, a part of crystal structure changes to a discontinuous one. It can be considered that this change in crystal structure is a cause of the poor reversibility. It became clear from studies on the crystal structure that $LiCoO_2$ prepared by an ordinary method, i.e. $LiCoO_2$ obtained by mixing, burning and slowly cooling a raw material, had a high orientation to c-axis and its crystal grew remarkably in a direction of c-axis.

The inventors considered that the poor reversibility could be prevented when the crystal structure of high orientation in c-axis was changed, so that we examined to optimize a superposition in c-axis direction and a spreading in a-axis direction. We found that $LiCoO_2$ excellent in the reversibility and able to increase the discharge capacity could be obtained when the peak strength of X-ray diffraction in (101) plane able to represent the spreading in a-axis direction too, as mentioned above, lay within the range of 5 to 15, if the peak strength of X-ray diffraction in (003) plane representing the superposition in c-axis direction was 100.

The reason why the $LiCoO_2$ excellent in the reversibility and able to increase the discharge capacity could be obtained is that an absolute value of change in crystal structure at time of charging can be restrained to a small by restraining the orientation in c-axis direction. In this case, the capacity will be decreased when the peak strength of X-ray diffraction in (101) plane in relation to (003) plane exceeds 15 by excessively restraining the orientation in c-axis direction, and the reversibility will be decreased when the peak strength is smaller than 5.

Brief Description of the Drawings

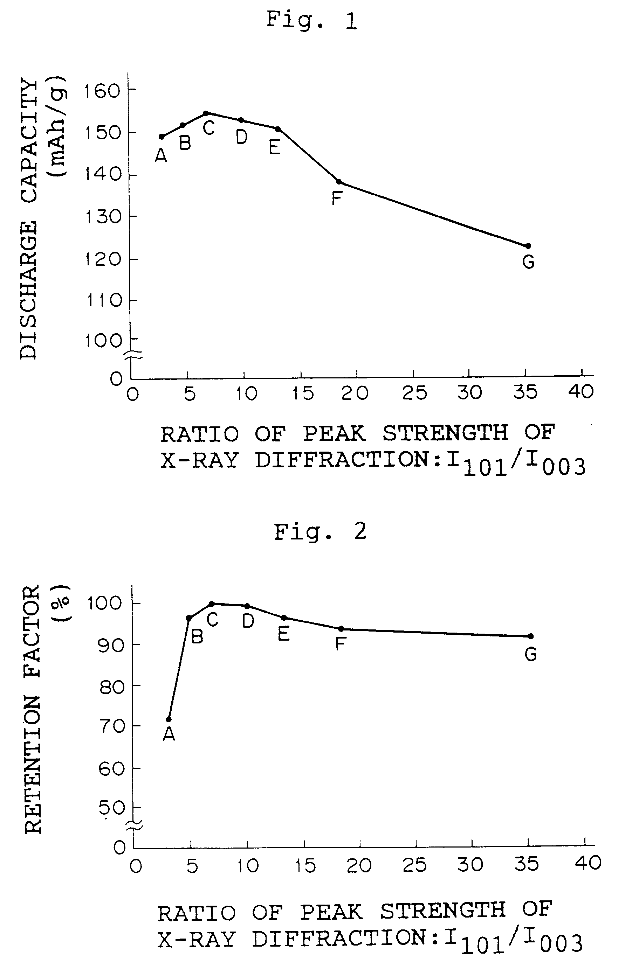

Fig. 1 is a characteristic diagram showing a discharge capacity of first cycle for a peak strength of X-ray diffraction in (101) plane in relation to (003) plane. Fig. 2 is a characteristic diagram showing a capacity retention factor for a peak strength of X-ray diffraction in (101) plane in relation to (003) plane.

Best Mode for Carrying Out the Invention

LiCoO$_2$ forming the positive active material was prepared first in the following way. Lithium carbonate and cobalt carbonate were weighed so as to attain a molar ratio 1 of Li to Co, and completely mixed while being ground in a ball mill. The obtained mixture was put in an alumina crucible and temporarily burnt at 650°C for 5 hours in air, and then burnt at 900°C for 20 hours. Thereafter, it was cooled and ground to be used for active materials.

In the above preparation, seven kinds of active materials were obtained by controlling a cooling speed after burning. All of these seven kinds of active materials were measured by X-ray diffraction, and it was ensured that these materials were all LiCoO$_2$. Seven kinds of LiCoO$_2$ were denoted as A, B, C, D, E, F and G respectively, and peak strengths of X-ray diffraction of in (101) plane in relation to (003) plane (expressed as $I_{101}/I_{003}$ hereunder) were measured for each. Results are shown in Table 1.

[Table 1]

| Active material | A | B | C | D | E | F | G |
|---|---|---|---|---|---|---|---|
| $I_{101}/I_{003}$ | 3.1 | 5.2 | 6.9 | 10.1 | 13.4 | 18.6 | 35.5 |

Coin type lithium batteries A through G were made as trial in the following way by using LiCoO$_2$ A through G as the positive active material respectively.

In the first place, the positive electrode was obtained as follows. LiCoO$_2$ powder, acetylene-black powder and polytetrafluoroethylene powder were mixed with a weight ratio of 85 to 10 to 5, and thoroughly kneaded after adding isopropyl alcohol to them. The obtained mixture was formed by a roll press into a sheet having a thickness of 0.8 mm and then punched to circular articles having a diameter of 16 mm, and it was heat treated at 200°C for 15 hours. The positive electrode was used by being pressed against a positive electrode can attached with a current collector.

A negative electrode was obtained by punching a lithium foil having a thickness of 0.3 mm into circular article having a diameter of 15 mm. The negative electrode was used by being pressed against a negative electrode can through a current collector.

A material prepared by dissolving LiBF$_4$ of 1 mol/l to $\gamma$-butylolactone was used for an electrolyte, and a fine porous membrane made of polypropylene was used for a separator.

A coin type lithium battery having a diameter of 20 mm and a thickness of 1.6 mm was made up by using the above-mentioned positive electrode, negative electrode, electrolyte and separator.

In the second place, charge/discharge cycle tests were performed on the obtained batteries A through G, with test conditions: charge current of 3mA, charge end voltage of 4.5V, discharge current of 3mA and discharge end voltage of 3.0V.

Fig. 1 and Fig. 2 are characteristic diagrams showing results of the above tests. Fig. 1 shows a discharge capacity at first cycle in relation to $I_{101}/I_{003}$, and Fig. 2 shows a capacity retention factor in relation to $I_{101}/I_{003}$. The capacity retention factor was calculated by the following equation.

$$\text{Capacity retention factor}(\%) = \frac{\text{Discharge capacity at 50th cycle}}{\text{Discharge capacity at first cycle}} \times 100$$

As seen from Fig. 1, the discharge capacity decreased when $I_{101}/I_{003}$ exceeded 15. As seen from Fig. 2, the reversibility lowered when $I_{101}/I_{003}$ became lower than 5, and the discharge capacity decreased with the cycle. Consequently, an optimum $I_{101}/I_{003}$ for LiCoO$_2$ excellent in the reversibility and able to increase the discharge capacity was 5 to 15.

Since the LiCoO$_2$ having an $I_{101}/I_{003}$ ranging from 5 to 15 is used for the positive active material as described above, this invention can provide a lithium secondary battery which is excellent in its reversibility and has a large discharge capacity even when it is subjected to the deep charging and discharging.

In this invention, the start material and manufacturing method of positive active material, the positive electrode, the negative electrode, the electrolyte, the separator and the battery shape etc. are not limited to those described in the above best mode. For example, a material synthesized from hydroxides or oxides may be used for the positive active material, an organic burnt material may be used for the negative electrode, and a solid electrolyte may be used in place of the electrolyte and the separator.

**Claims**

1. A lithium secondary battery utilizing $LiCoO_2$ as its positive active material, characterized by that a peak strength of X-ray diffraction in (101) plane of $LiCoO_2$ lies within a range of 5 to 15 when a peak strength of X-ray diffraction in (003) plane is 100.

## Fig. 1

Fig. 1 — Graph of DISCHARGE CAPACITY (mAh/g) versus RATIO OF PEAK STRENGTH OF X-RAY DIFFRACTION: $I_{101}/I_{003}$, with data points labeled A, B, C, D, E, F, G.

## Fig. 2

Fig. 2 — Graph of RETENTION FACTOR (%) versus RATIO OF PEAK STRENGTH OF X-RAY DIFFRACTION: $I_{101}/I_{003}$, with data points labeled A, B, C, D, E, F, G.

# INTERNATIONAL SEARCH REPORT

**I. CLASSIFICATION OF SUBJECT MATTER** (if several classification symbols apply, indicate all) [6]

According to International Patent Classification (IPC) or to both National Classification and IPC

Int. Cl$^5$  H01M4/58

**II. FIELDS SEARCHED**

| Minimum Documentation Searched [7] | |
|---|---|
| Classification System | Classification Symbols |
| IPC | H01M4/48-4/58, H01M4/02, H01M10/40 |

Documentation Searched other than Minimum Documentation
to the Extent that such Documents are Included in the Fields Searched [8]

| | |
|---|---|
| Jitsuyo Shinan Koho | 1942 - 1992 |
| Kokai Jitsuyo Shinan Koho | 1973 - 1992 |

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| Y | JP, A, 62-256371 (Sony Corp.), November 9, 1987 (09. 11. 87), & US, A, 4770960 & EP, A1, 243926 | 1 |
| A | JP, A, 63-274059 (Sony Corp.), November 11, 1988 (11. 11. 88), & US, A, 4828834 & DE, A1, 3736366 & FR, A1, 2606219 | 1 |
| A | JP, A, 1-294372 (Sony Corp.), November 28, 1989 (28. 11. 89) | 1 |
| A | JP, A, 1-294373 (Sony Corp.), November 28, 1989 (28. 11. 89) | 1 |
| A | JP, A, 4-56064 (Sony Corp.), February 24, 1992 (24. 02. 92) | 1 |

\* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| November 27, 1992 (27. 11. 92) | December 15, 1992 (15. 12. 92) |
| International Searching Authority | Signature of Authorized Officer |
| Japanese Patent Office | |

Form PCT/ISA/210 (second sheet) (January 1985)